(19) Europäisches Patentamt
European Patent Office
Office européen des brevets

(11) Publication number: **0 236 517 A1**

(12) **EUROPEAN PATENT APPLICATION**

(21) Application number: **86103028.6**

(51) Int. Cl.4: **C08L 69/00** , C08G 63/62

(22) Date of filing: **07.03.86**

(43) Date of publication of application: **16.09.87 Bulletin 87/38**

(84) Designated Contracting States: **AT BE CH DE FR GB IT LI LU NL SE**

(71) Applicant: **AMOCO CORPORATION**
**200 East Randolph Drive P.O. Box 5910-A**
**Chicago Illinois 60680(US)**

(72) Inventor: **Harris, James Elmer**
**211 Birchview Drive**
**Piscataway New Jersey 08854(US)**
Inventor: **Robeson, Lloyd Mahlon**
**R.D. No. 1, box 244**
**Whitehouse Station New Jersey 08889(US)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40(DE)**

(54) **Cookware prepared from polycarbonates.**

(57) Cookware prepared from polycarbonates containing repeating units derived from bis-(3,5-dimethyl-4-hydroxyphenyl)sulfone (TMBS), optionally a dihydric phenol such as 2,2-bis-(4-hydroxyphenyl)propane (Bisphenol A), and a carbonate precursor. The cookware can be used in essentially all cooking oven applications.

EP 0 236 517 A1

# COOKWARE PREPARED FROM POLYCARBONATES

## Brief Summary of the Invention

This invention relates to cookware prepared from polycarbonate compositions containing repeating units derived from bis-(3,5-dimethyl-4-hydroxyphenyl) sulfone (TMBS), optionally a dihydric phenol, such as 2,2-bis-(4-hydroxyphenyl) propane (Bisphenol A), and a carbonate precursor. The cookware can be used in essentially all cooking oven applications.

Cookware utilized in conventional ovens should have the capability of withstanding the great temperature variations existing between the temperature setting devices and the actual temperatures within the oven. Though the cookware is only exposed to the oven's actual temperature, the user's expectations of the cookware's capacity to withstand heat is a critical factor in the use of that cookware. Putting cookware that deforms at e.g. 200°F into an oven set for 325°F is clearly illogical. Equally illogical would be the use of the same cookware in an oven whose temperature setting device fails to accurately control the oven's temperature. Thus a low temperature setting could result in a high oven temperature, and the cookware would still deform. The realities of life are that few commercially available gas and electric ovens have accurate temperature controls and in most cases the ovens run hotter than the temperature setting. In a number of cases, an oven temperature setting of 400°F resulted in an oven temperature as high as 475-500°F. This is the basis for the first sentence of this paragraph.

Plastics are typically termed thermoplastic or thermosetting. Thermoplastics are deformable with application of sufficient heat. Because thermosetting plastics (resins) are crosslinked, they are fairly resistent to heat deformation, certainly more so than thermoplastics. Consequently, thermosetting resins have been extensively used for cookware. For example, cookware have been made from melamine-formaldehyde resins, unsaturated polyester resins, and the like. Such plastics have excellent heat resistance. However, they do suffer from a number of significant deficiencies. Because they crosslink during their curing processes when molded, they shrink and pull away from the mold surfaces. Unless they are properly filled with small particulate fillers, the molded objects have very uneven surfaces, and they are subject to significant crazing and/or cracking. High filler loading adversely affects the physical properties of the molded object and precludes the direct obtaining of a glossy surface. Thermosetting resins are difficult to mold. They generally have to be compression or transfer-molded. Such processes require much materials handling, large equipment, complicated and relatively expensive molds, and significant energy costs.

Thermoplastics have been used for coating paper dishware and some of them have been used as cookware. However, their use as cookware is severely restricted, certainly to low temperature or microwave oven applications. Thermoplastics, such as Udel™ polysulfone (made by Union Carbide Corporation), have been sold for use in making cookware designed for microwave oven applications. One would expect that some of such cookware has been generally employed in conventional ovens as well. However, Udel™ polysulfone has not proven to be suitable for the wide temperatures used in conventional oven cooking and hence, its usage in such applications has not been recommended.

Though the physical properties of a thermoplastic might be considered at first blush the basis for its use as generally employable cookware, i.e., cookware usable in any kind of oven up to a temperature of 500°F, such is clearly not the case. Since cookware is in contact with the food placed therein, the plastic it is made from must be safe to use and not contaminate the food it contacts. Temperature gradients exist within conventional ovens, and such a variable requires actual working information about a plastic's performance as cookware under a wide variety of conditions. Further, unless the cookware is intended to be disposable after the first use, it should have the capacity of withstanding repeated washings, by hand or by machine. It should be detergent resistant and not absorb food, oils and fats. It should be able to withstand warping on usage. If it is intended for household use, then it should meet the aesthetics typically favored, such as high gloss and smooth surfaces. It is desirable that the thermoplastic be moldable into a variety of cookware configurations by a simple molding process such as vacuum forming or injection molding. Moreover, since the use conditions are quite severe, necessitating the use of a high performance plastic that tends to be more costly, then all of such performance capabilities are desirably achievable with the minimum amount of plastic usage.

It has been found as a result of this invention that linear thermoplastic polycarbonates having repeating units derived from bis-(3,5-dimethyl-4-hydroxyphenyl)sulfone (TMBS) possess these combinations of properties and provide attractive and useful cookware which can be used in essentially all cooking oven applications.

This invention relates to cookware prepared from TMBS containing-polycarbonates, which cookware is suitable for microwave and conventional oven applications. Cookware made from TMBS containing-polycarbonates has a good combination of physical properties and meets the key requirements needed for cookware molded from plastic materials described above. Also, cookware prepared from the TMBS containing-polycarbonates exhibits excellent microwaveability and can be used in both microwave and conventional ovens.

In particular, this invention relates to cookware prepared from a composition comprising a polycarbonate containing repeating units (I) having the formula

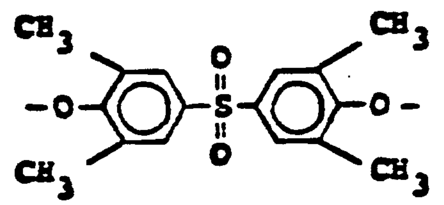

(I)

and optionally repeating units (II) having the formula

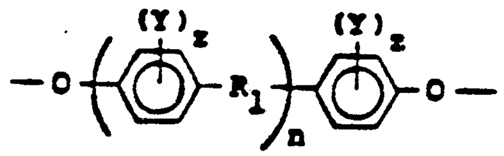

(II)

in which repeating units (I) and optionally repeating units (II) are connected by interbonding units derived from a carbonate precursor, wherein Y is selected from alkyl groups of 1 to 4 carbon atoms, chlorine or bromine, each z, independently, has a value of from 0 to 4 inclusive, n has a value of 0 or 1, $R_1$ is a divalent saturated or unsaturated hydrocarbon radical, particularly an alkylene or alkylidene radical having from 1 to 6 carbon atoms or a cycloalkylidene or cycloalkylene radical having up to and including 9 carbon atoms, O, CO, $SO_2$, S or a direct bond, with the proviso that when $R_1$ is $SO_2$ then repeating unit (II) is not the same as repeating unit (I), and wherein the polycarbonate has a reduced viscosity of at least about 0.3 dl/g as measured in chloroform at a concentration of 0.5g/100 ml at 25°C. Thus, the group $R_1$ may be a straight-chain or branched methylene-, ethylene-, proplyene-, butylene-, pentylene-or hexylene group or the corresponding cyclic groups. $R_1$ may also stand for a straight-chain or branched methylidene-, ethylidene-, propylidene-, butylidene-, pentylidene-or hexylidene group or the corresponding cyclic groups.

The TMBS-containing polycarbonates may be made into cookware in the form of roasting trivets, molds, pans, casserole and baking dishes, as well as any other type of container or tray useful for cooking or baking.

## Detailed Description

The TMBS containing-polycarbonates employed in the cookware of this invention can be produced by either conventional solution or interfacial polymerization techniques known in the art for the manufacture of polycarbonates, such as described in U.S. Patent 3,737,409. The solution process involves reacting the carbonate precursor, e.g., phosgene, with bisphenol compounds which give repeating units (I) and (II), for example, bis-(3,5-dimethyl-4-hydroxyphenyl)sulfone and 2,2-bis-(4-hydroxyphenyl)propane. The reaction medium may be in a single organic phase employing a compatible solvent such as a halohydrocarbon and utilizing a base, such as pyridine, to accept by-product hydrogen chloride. Alternatively, interfacial polymerization techniques may be employed wherein the reaction media is composed of an organic phase and an alkaline aqueous phase. A phase transfer catalyst, that is, an acid acceptor, such as triethylamine may be used to accept the by-product hydrogen chloride from the condensation in the organic phase and to transfer the hydrogen chloride to the alkaline aqueous phase where it is neutralized and the catalyst is regenerated to its unprotonated form to accept additional hydrogen chloride. Additionally, chain length

regulators such as para-tertiary-butyl phenol may be employed to limit the molecular weight and thus the viscosity of the polymer. Examples of the interfacial polymerization process are described in U.S. Patent 3,646,402, issued February 29, 1972, and by P. W. Morgan, Condensation Polymers By Interfacial and Solution Methods (Interscience 1965).

The solution and interfacial polymerization techniques known in the art for the manufacture of polycarbonates can be applied equally in the practice of the instant invention, except as hereinafter modified.

The utilization of chain stoppers in the manufacture of polycarbonates is very well known in the art. Suitable chain stoppers include mono functional carboxylic acids or hydroxy compounds such as phenol, para-tertiary butylphenol, benzoic acid, para-tertiary butylbenzoic acid, and the like. The choice of a chain stopper is not critical to practice of the invention, any suitable mono-carboxylic acid or mono-hydroxy compound may be employed. The chain stopper unit, because it stops the growth of the polymer, becomes the terminal unit of the polycarbonate.

Any conventional organic solvent that will solvate the product polymer may be used, so long as the solvent is chemically unreactive in the polycarbonate polymerization. A preferred group of solvents is the chlorinated aliphatic hydrocarbons of 1-4 carbons such as dichloromethane, chloroform, carbon tetrachloride, dichloroethane, trichloroethane, trichloroethylene, tetrachloroethylene, and mixtures thereof. Another desirable class of solvents is the aromatic hydrocarbons and halogenated aromatic hydrocarbons such as toluene, monochlorobenzene, dichlorobenzene, and mixtures thereof. Preferred solvents are the chloromethanes and especially dichloromethane. The solvents used in a solution polymerization process are preferably water-free so as to avoid side reactions of the carbonate precursor.

The acid acceptor employed can be either an organic or an inorganic acid acceptor. A suitable organic acid acceptor is pyridine or a tertiary amine which includes such materials as triethylamine, dimethylaniline, tributylamine, etc. The inorganic acid acceptor can be one which can be either a hydroxide, a carbonate, a bicarbonate, or a phosphate of an alkali or alkaline earth metal.

The interfacial process involves the utilization of an organic phase and an aqueous phase. In carrying out the interfacial process, it is desirable that the organic solvent chosen be immiscible with water. The quantity of organic solvent and the concentration of the reactants in the solvent are not critical except that sufficient solvent should be present to dissolve the product polymer. An amount of dichloromethane sufficient to form a product polymer solution of about 30 weight percent polymer is generally the minimum amount of solvent for this particular system. Other materials such as chain length regulators, that is the chain stoppers, catalysts, foam depressants, and the like can also be present in the organic phase.

The aqueous phase is normally basic to the extent of a pH of at least about 8 and preferably at least about 9 prior to reaction. During reaction, the pH may vary within the range of about 7-12, but preferably is kept above 7 by the addition of base such as sodium hydroxide when needed.

The reactants, in an interfacial polymerization reaction, are provided in the aqueous phase and are referred to herein as bisphenolates. These reactants are normally formed by dissolving the bisphenols in water with an inorganic base, for example, an aqueous or alkaline earth metal hydroxide, preferably an alkali metal hydroxide, and most preferably, sodium hydroxide. In the preferred embodiment, the sodium bisphenolate of bis-(3,5-dimethyl-4-hydroxyphenyl)sulfone and the sodium bisphenolate of 2,2-bis-(4-hydroxyphenyl)-propane are utilized in the aqueous phase. The concentrations of the bisphenolates in the aqueous phase are not critical to the present invention. Concentrations up to the solubility limits of the bisphenol are preferred, such that excess amounts which will form a slurry are less desirable. A representative range for bisphenol-A is about 2 to 15 weight percent and preferably about 3 to 10 weight percent. Because the monomer/monomer ratio will affect the properties of the resulting polycarbonate, the concentration of bis-(3,5-dimethyl-4-hydroxyphenyl)sulfone is adjusted with regard to the amount of bisphenol-A utilized, for the purposes of optimizing the properties of the resulting polymer. Other materials may be present in the aqueous phase in addition to the bisphenolates and excess base such as anti-oxidants, foam depressants, catalysts and chain stoppers.

The processes for making the polycarbonates used in the manufacture of cookware, whether by solution polymerization or by interfacial polymerization, may be carried out at ambient temperature conditions, such as typical room temperature conditions, i.e. 23-25°C. Higher and lower temperatures may be employed, taking into regard the problems of stabilizing an emulsion at temperatures above or below ambient temperatures. The solution process allows the use of a wide temperature range, no particular temperature being absolutely critical to the practice of the solution process.

A preferred feature in making the polycarbonates employed inthe cookware of this invention is that the requisite stoichiometric amount of the bisphenol compound which gives repeating units (II) described in the formula above, for example, Bisphenol-A, is withheld from the initial polymerization reaction. That is, at least 15 weight percent of the total Bisphenol-A added is initially withheld from the reaction and added at the last stages of polymerization. This procedure yields a polymer wherein the terminal portions of the polymer contain a predominant amount of the Bisphenol-A monomer to the exclusion of the TMBS monomer. This is described more fully in U.S. Patent Application D-13,840.

This reserved amount is typically added to the polymerization reaction when the desired polymer growth has been attained and the chain regulator, or chain stopper, is to be added for polymer length regulation. Thus, the remaining Bisphenol-A is added concurrently with the chain regulator, e.g., p-t-butylphenol, and additional carbonate precursor, e.g., phosgene, to assure their reaction to lengthen and terminate the polymer. The amount of phosgene added is equivalent to that amount which is necessary to add the Bisphenol-A and the chain regulator to the polymer. If the chain regulator is added before the final addition of Bisphenol-A, the terminated polymer would be unable to react with the Bisphenol-A. Thus, it is important in this preferred embodiment not to chain stop the polymer before the last addition of Bisphenol-A used in the termination of the polymer.

Another preferred feature in making the polycarbonates employed in the cookware of this invention involves reacting, for example,
2,2-bis-(4-hydroxyphenyl) propane (Bisphenol A) dichloroformate with
bis-(3,5-dimethyl-4-hydroxyphenyl) sulfone (TMBS) or, in the alternative, 2,2-bis-(4-hydroxyphenyl) propane (Bisphenol A) with
bis-(3,5-dimethyl-4-hydroxyphenyl) sulfone (TMBS) dichloroformate. This procedure yields a polymer having predominantly ordered, alternating repeating units of the above monomers. This is described more fully in U.S. Patent Application D-14178.

The reactant bis-(3,5-dimethyl-4-hydroxyphenyl) sulfone (TMBS) which gives repeating units (I) hereinabove can be prepared according to the process described in U.S. Patent 3,383,421.

Suitable bisphenol compounds which give repeating units (II) having the formula described above, in addition to 2,2-bis-(4-hydroxyphenyl) propane (Bisphenol A) and bis-(4-hydroxyphenyl) sulfone, include bis-(4-hydroxyphenyl) methane, 2,2-bis(4-hydroxy-3-methylphenyl) propane, 4,4-bis-(4-hydroxyphenyl) heptane, 2,2-bis-(3,5-dichloro-4-hydroxyphenyl) propane, 2,2-bis-(3,5-dibromo-4-hydroxyphenyl) propane and bis-(3-chloro-4-hydroxyphenyl) methane. Other bisphenol compounds are also available and are disclosed in U.S. Patents 2,999,835, 3,028,365 and 3,334,154.

The carbonate precursor which gives the interbonding units can be either carbonyl halide, a carbonate ester or a haloformate. The carbonyl halides which can be employed herein are carbonyl bromide, carbonyl chloride, carbonyl fluoride, etc. or mixtures thereof. Typical of the carbonate esters which may be employed herein are diphenyl carbonate, di-(halophenyl) carbonates such as di-(chlorophenyl) carbonate, di-(bromophenyl) carbonate, di-(trichlorophenyl) carbonate, di-(tribromophenyl) carbonate, etc.; di-(alkylphenyl) carbonates such as di-(iolyl) carbonate, etc.; di-(naphthyl) carbonate, di-(chloronaphthyl) carbonate, phenyl tolyl carbonate, chlorophenyl chloronaphthyl carbonate, etc. or mixtures thereof. The haloformates suitable for use herein include bishaloformates of dihydric phenols (bis-chloroformates of hydroquinone, Bisphenol A, etc.) or glycols (bis-haloformates of ethylene glycol, neopentyl glycol, polyethylene glycol, etc.). While other carbonate precursors will occur to those skilled in the art, carbonyl chloride, also known as phosgenes is preferred and gives interbonding units having the formula

$$-\overset{O}{\overset{\|}{C}}-$$

Also preferred are interbonding units derived from Bisphenol A dichloroformate having the formula

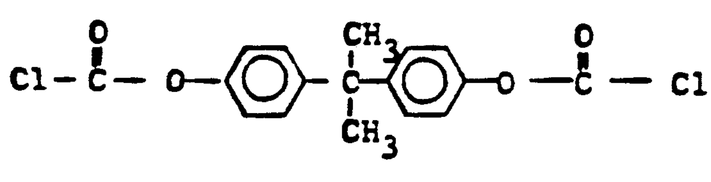

The polycarbonate reaction between the reactants which give repeating units (I) hereinabove, repeating units (II) hereinabove and interbonding units derived from a carbonate precursor proceeds on a stoichiometric basis such that the desired polycarbonate is formed having the desired molecular weight. Stoichiometry is not critical and the only requirement is that the amounts employed are sufficient to form the polycarbonate. By varying the amounts of reactants, one can vary the polycarbonate polymer ultimately produced and its properties. The polycarbonates employed in the cookware of this invention preferably contain from about 20 weight percent to 100 weight percent of repeating units (I) hereinabove, more preferably from about 25 weight percent to about 95 weight percent, and most preferably from about 40 weight percent to about 60 weight percent. The polycarbonates employed in the cookware of this invention preferably contain from 0 weight percent to about 80 weight percent of repeating units (II) hereinabove, more preferably from about 5 weight percent to about 75 weight percent, and most preferably from about 40 weight percent to about 60 weight percent.

Conventional procedures may be used for the addition of TMBS, Bisphenol-A, carbonate precursor and the chain regulator. Preferably, TMBS and optionally Bisphenol-A are added neat in the solution process or as disodium salts dissolved in water in the interfacial process to the system. In the solution process, the chain stopper can be added with or subsequently to the addition of the TMBS and Bisphenol-A. Then the carbonate precursor such as phosgene can be bubbled through the solution and polymerization continued. In the interfacial process, the alkali salt of the chain stopper can be added with the TMBS and Bisphenol-A, or the hydroxyl form can be added neat or in solution with the phosgene/dichloromethane solution added to the mixture. With additional stirring, the final polymerization phase is completed.

The structure of the polycarbonate polymers employed in this invention can be modified to some extent by including in the polymerization reaction other dihydroxy compounds, typically not more than about 10 weight percent of the total weight of the polycarbonate. For example, one might include along with Bisphenol-A and bis-(3,5-dimethyl-4-hydroxyphenyl)sulfone (TMBS), other dihydroxy compounds either as such or in the haloformate form, as a partial substitute and modifier of the polymeric structure, without adversely affecting the overall properties of the polymeric structure of this invention. For example, such dihydroxy compounds as ethylene glycol, propylene glycol, 1,4-butylene glycol, neopentyl glycol and the like can be included in the polymerization reactions to manufacture the polycarbonate polymers employed in this invention.

Other additives which may be used in combination with the TMBS containing-polycarbonates employed in the cookware of this invention include mineral fillers such as chalk, calcite and dolomite; silicates including mica, talc, wollastonite; silicon dioxide; glass spheres; glass powders; aluminum; clay; quartz; and the like. Additional additives include reinforcing fibers such as carbon fibers, glass fibers, and the like, and mixtures thereof; pigments, such as titanium dioxide; thermal stabilizers such as zinc oxide; ultraviolet light stabilizers, plasticizers, and the like.

The mineral fillers and reinforcing fibers may be used in amounts of up to about 30, preferably up to about 25 weight percent. The pigments are generally used in amounts of up to about 10 weight percent. The stabilizers are used in stabilizing amounts to stabilize the composition for the effect desired.

Additionally, the preparation of the polycarbonates employed in the cookware of this invention may be carried out in the presence of from about 10 to about 60 weight percent, based on the weight of the polycarbonate produced, of a processing aid. The preferred processing aids are diphenyl ether compounds, a cycloaliphatic, substituted aromatic, or heteroaromatic compound, and a halogenated and/or etherated substituted aromatic or heteroaromatic compound, or mixtures of these. Such a processing aid may be useful in controlling and/or modifying viscosity, reaction time, color, stability and the like.

Polymer recovery can be achieved by processes well known in the art to recover a moldable polycarbonate such as by coagulation and filtration.

In addition, the polycarbonates employed in the cookware of this invention exhibit excellent compatibility with polyethersulfones such as those which are described in U.S. Patent 3,264,536 and U.S. Patent 4,175,175, as well as with other poly(arylether)s, poly(ester-carbonate)s, polyesters, polyarylates, poly(ether imide)s, styrenic polymers, vinyl chloride containing polymers and the like. Such blends exhibiting mechanical compatability may be useful in manufacturing the cookware of this invention. Mechanically compatibility refers to a balance of mechanical properties, e.g., strength, toughness and the like, in miscible blend systems which is generally an average of the mechanical properties of the particular blend constituents. The moldable and compatible blends may typically contain from about 5 weight percent to about 95 weight percent of the polycarbonates employed in the cookware of this invention and from about 95 weight percent to about 5 weight percent of a polymer exhibiting mechanical compatibility with the polycarbonate. The weight percent ratio of the polymers may vary widely depending upon the properties sought from the molded products made from the blend.

The molecular weight of these TMBS containing-polycarbonate polymers is indicated by reduced viscosity in indicated solvents. As well understood in the art, the viscosity of a resin solution bears a direct relationship to the weight average molecular size of the polymer chains, and is typically the most important single property that can be used to characterize the degree of polymerization. The reduced viscosity assigned to the TMBS containing-polycarbonates is therefore to be understood as significant in reflecting molecular size rather than consideration concerning the viscosity per se. Most of these polycarbonate polymers have indicated ready solubility in N-methylpyrrolidinone, chloroform, or tetrachloroethane or other similar solvents.

Reduced viscosity (R.V.) as used herein was determined by dissolving a 0.2 or 0.5 gram sample of polycarbonate polymer in the indicated solvent, i.e., chloroform, contained in a 100 milliliter volumetric flask so that the resultant solution measured exactly 100 milliliters at 25°C. in a constant temperature bath. The viscosity of 3 milliliters of the solution which had been filtered through a sintered glass funnel was determined in an Ostwald or similar type viscometer at 25°C. Reduced viscosity values were obtained from the equation:

$$\text{Reduced Viscosity} = \frac{t_s - t_o}{C \cdot t_o}$$

wherein:

$t_o$ is the efflux time of the pure solvent;

$t_s$ is the efflux time of the polymer solution: and

C is the concentration of the polymer solution expressed in terms of grams of polymer per 100 milliliters of solution.

The polycarbonates employed in manufacturing the cookware of this invention are characterized as linear thermoplastic structures which have a relatively high molecular weight, that is, a reduced viscosity determined at a concentration of 0.5 g/100 ml in chloroform at 25°C of at least 0.3 dl/g, preferably at least 0.5 dl/g and, typically not exceeding about 1.5 dl/g. These polymers are exceptionally tough, offer high heat distortion temperatures and possess superior molding characteristics and physical properties as described above for use in cookware applications, especially cookware suitable for microwave and conventional oven applications.

The polycarbonates used in making the cookware of this invention can be fabricated by conventional methods known in the art. The polycarbonate is generally compounded in an extruder. The compounding is carried out at temperatures of from about 200°C to about 400°C. The compounded material may be pelletized by conventional techniques.

The compounded material may be fabricated into the desired cookware article by conventional techniques such as by injection molding, compression molding, thermoforming, or blow molding. Preferably, the compounded material is extruded into a film or sheet and then thermoformed into the desired cookware article by methods well known in the art.

The polycarbonate either alone or in combination with other materials may be fed in particulate form - (such as pellets, granules, particles, powders, and the like) into an extruder which extrudes the material into film or sheet form. The extruders which are used to form sheet from either the compounded materials or individual ingredients are well known in the art. Typically, the extruder may be a 1 1/2 inch Sterling extruder containing an extruder screw with a length to diameter ratio of 24 to 1 and a Maddock mixing flute. The Maddock mixing flute is of the type which is described in U.S. Patent No. 3,730,493. Such a mixing head or section is referred to as a fluted mixing head of the outside-in-type indicating that the passage of material is from the outside flutes through radial passages to a central axial internal passage from which it is discharged through the downstream end of the mixing section.

The polycarbonate composition is generally formed into a sheet at a temperature of from about 550 to about 600°F. The sheet is extruded horizontally from a die. One of the die jaws is adjustable to permit minor changes in the die openings to maintain close control on sheet gauge uniformity. The takeoff unit for the sheet usually comprises a vertical stack of three driven highly polished plated rolls. The material passes over and under the middle roll and around the bottom roll. The upper and lower rolls may be adjusted in vertical position, but the middle roll is stationary. The top roll can be used to polish the sheet as it passes over the middle roll. The sheet is then passed through a cutter where it is cut to the desired length. The sheet can vary in thickness depending on the thickness of the end product desired. Generally, the thickness of the sheet is from about 10 to about 25 mils.

The sheet is then thermoformed into the shape of the desired cookware article. Thermoforming may be accomplished by methods well known in the art such as those described in, for example, Engineering Polymer Science and Technology, Volume 13, 1971, pages 832-843. Generally, the sheet is vacuum formed into a female mold. In this process, the sheet is locked in a frame around its periphery only, is heated to a predetermined temperature for a predetermined time and then brought into contact with the edge of the mold. This contact creates a seal so that it is possible to remove the air between the hot sheet and the mold, allowing atmospheric pressure to force the hot sheet against the mold. Also, the sheet may be draped manually to the required contour of a female mold, such as to make a seal possible. Positive air pressure may also be applied against the top of the sheet to force it into a female mold as an alternative to vacuum forming.

To promote uniformity of distribution in cookware of particular shapes such as a box shape, a plug assist may be used. This may be any type of mechanical helper which carries extra sheet toward an area which would otherwise be too thin. Usually the plug is made of metal, and heated to a temperature slightly below that of the hot plastic, so as not to cool the sheet before it can reach its final shape. Instead of metal, a smooth grained wood can be used or a thermoset plastic, such as phenolic or epoxy. These materials are poor conductors of heat and hence do not withdraw much heat from the sheet. Plug assists are adaptable both to vacuum forming and pressure forming techniques.

Another method which can be used to thermoform sheet is matched mold forming. In this method, the sheet is locked into a clamping frame and heated to the proper forming temperature. A male mold is positioned on the top or bottom platen with a matched female mold mounted on the other platen. The mold is then closed, forcing the sheet to the contours of both molds. The clearance between the male and female molds determines the wall thickness. Trapped air is allowed to escape through both mold faces. Molds are held in place until the sheet cools.

In a preferred embodiment, the sheet is locked into a frame around its periphery only. The sheet is then heated in an oven to a temperature above the glass transition of the polymer(s) in the composition, which is generally between about 530 and about 600°F. The sheet is heated at this temperature for about 15 to about 20 seconds so that the sheet sags under its own weight. The sheet is then brought into contact with the edge of a female mold so as to create a seal between the hot plastic and the mold. The female mold is positioned in the top platen. A vacuum is then started so that the sheet is pulled into the confines of the female mold. The mold temperature is generally from about 240 to about 380°F. The material is allowed to remain in the mold for about 30 seconds so that it cools from its initial temperature of between 530 and 600°F to the mold temperature which is from about 240 to about 380°F. The formed sheet at this point is rigid and can be removed from the mold. The preferred molding procedure results in a better distribution of thickness of material in the molded article. Also, the molded cookware articles are generally free of pin holes when this procedure is used. In a variation of the preferred procedure, the sheet is forced into the female mold with a plug assist. The plug is so positioned that it carries the sheet into the female mold but does not touch any part of the mold. The vacuum is then turned on so that the sheet forms to the contours of the female mold. The formed sheet is allowed to cool as described above and then removed from the mold.

The cookware of this invention may be any type of container or tray which is used to heat or cook food. The cookware may be of any shape or design with dimensions dependent upon the desired end use. Representative cookware is found in, for example, U.S. Patents 3,938,730; 3,743,077 and 3,955,170. Also representative designs of cookware are described in, for example, Des. 236,574; 194,277 and 236,182. The cookware may be used to heat and bake all types of food, including frozen food in a conventional or microwave oven.

As used in this invention, the glass transition temperature (Tg) of the polymers herein has a direct correlation with the heat distortion temperature of the polymers. In general, the heat distortion temperature of the polymers is typically 10°C to 20°C below the glass transition temperature (Tg) of the amorphous polymers.

Although this invention has been described with respect to a number of details, it is not intended that this invention should be limited thereby. The examples which follow are intended solely to illustrate the embodiments of this invention which to date have been determined and are not intended in any way to limit the scope and intent of this invention.

Example 1

To a 4-necked one liter flask fitted with a nitrogen/phosgene sparger (coarse), thermometer, reflux condenser, a 20% sodium hydroxide trap, and mechanical stirrer was added 53.60 grams (0.175 moles) of bis(3,5-dimethyl-4-hydroxyphenyl)sulfone(TMBS), 23.43 grams (0.127 moles) of 2,2-bis-(4-hydroxyphenyl)-propane (Bisphenol A), 500 milliliters of dichloromethane, and 130 milliliters of pyridine.

After initial sparging with nitrogen for 15 minutes, the phosgene was turned on and the nitrogen turned off. The phosgene was added at an approximate rate of 0.5 grams per minute at room temperature for 111 minutes. A total of about 55.5 grams of phosgene was added. The polymer was diluted with 200 milliliters of dichloromethane and filtered to remove the pyridine hydrochloride. The solution was washed sequentially with distilled water, a 5% hydrochloric acid and 0.25% acetic acid solution, and again with distilled water. The mixture was then coagulated in 50/50 acetone/methanol, filtered, and washed with methanol. The polymer was dried overnight under vacuum and 60°C. The reduced viscosity at 25°C in 0.5% chloroform solution was 1.35 dl/g.

Comparative Example A

A sample of a Bisphenol A polycarbonate commercially available from the General Electric Company, Pittsfield, Massachusetts as Lexan 101 and having a reduced viscosity at 25°C in 0.2% chloroform solution of 0.57 dl/g was compression molded into a plaque in a 4 inch X 4 inch X 0.040 inch cavity mold at about 275°C using a South Bend hydraulic press with heated platens. The resultant molded product was determined to have a glass transition temperature (Tg) of 145°C by the resilience minimum technique using modulus-temperature data and resilience-temperature data as described in "Polymer-Polymer Miscibility", Olabisi et al., p. 122-126, Academic Press, New York, 1979.

Example 2

A sample of the TMBS/Bisphenol A polycarbonate prepared in Example 1 was compression molded into a plaque in a 4 inch X 4 inch X 0.040 inch cavity mold at about 200°C using a South Bend hydraulic press with heated platens. The resultant molded product was determined to have a glass transition temperature (Tg) of 230°C by the resilience minimum technique using modulus-temperature data and resilience-temperature data as described in "Polymer-Polymer Miscibility". Olabisi et al., p. 122-126, Academic Press, New York, 1979.

Comparative Example B

The Bisphenol A polycarbonate molded plaque prepared in Comparative Example A was cut in half and the two halves were placed on top of each other to produce a 2 inch X 4 inch X 0.080 inch layered plaque. The layered plaque was then placed in a Panasonic microwave oven equipped with a rotary carousel. The microwave oven was turned on and set at full power, and the time required for the plaque to fail was recorded. Failure was defined as any unwanted deformation of the plaque such as bubbling, foaming, warping and the like. The plaque failed after 37 minutes exposure in the microwave oven.

Example 3

The TMBS/Bisphenol A polycarbonate molded plaque prepared in Example 2 was cut in half and the two halves were placed on top of each other to produce a 2 inch X 4 inch X 0.080 inch layered plaque. The layered plaque was then placed in a Panasonic microwave oven equipped with a rotary carousel. The microwave oven was turned on and set at full power, and the time required for the plaque to fail was recorded. Failure was defined as any unwanted deformation of the plaque such as bubbling, foaming, warping and the like. The plaque did not fail after two hours exposure in the microwave oven.

Comparative Example C

A Bisphenol A polycarbonate molded plaque as prepared in Comparative Example A was cut in half and the two halves were placed on top of each other to produce a 2 inch X 4 inch X 0.080 inch layered plaque. The layered plaque was placed on the rim of a Petri dish (3.5 inch diameter X 0.70 inch height) which was then placed in a circulating air oven preheated to 200°C. The time required for the plaque to fail was recorded. Failure was defined as any unwanted deformation of the plaque such as bubbling, foaming, warping and the like. The plaque failed after 30 seconds exposure in the circulating air oven.

Example 4

A TMBS/Bisphenol A polycarbonate molded plaque as prepared in Example 2 was cut in half and the two halves were placed on top of each other to produce a 2 inch X 4 inch X 0.080 inch layered plaque. The layered plaque was placed on the rim of a Petri dish (3.5 inch diameter X 0.70 inch height) which was then placed in a circulating air oven preheated to 200°C. The time required for the plaque to fail was recorded. Failure was defined as any unwanted deformation of the plaque such as bubbling, foaming, warping and the like. The plaque did not fail after one hour exposure in the circulating air oven.

Example 5

A TMBS/Bisphenol A polycarbonate molded plaque as prepared in Example 2 was cut in half and the two halves were placed on top of each other to produce a 2 inch X 4 inch X 0.080 inch layered plaque. The layered plaque was placed on the rim of a Petri dish (3.5 inch diameter X 0.70 inch height) which was then placed in a circulating air oven preheated to 200°C. However, before placing in the oven, a strip of bacon about one inch wide and about 3 inches long (obtained by folding a 12 inch strip three times) was placed on top of the layered plaque. After an exposure time of 20 minutes, the layered plaque and bacon were removed from the oven. The bacon was cooked to a crisp texture. The layered plaque exhibited no distortion, cracking, crazing, or surface blemishing. This experiment was repeated five times. Again, no distortion, cracking, crazing, or surface blemishing of the layered plaque was observed. This demonstrates the utility of TMBS/Bisphenol A polycarbonate molded product as an excellent cooking surface in conventional ovens.

**Claims**

1. Cookware made from a composition comprising a polycarbonate containing repeating units (I) having the formula

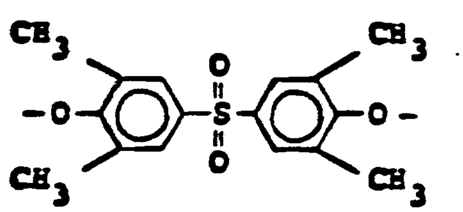

(I)

and optionally repeating units (II) having the formula

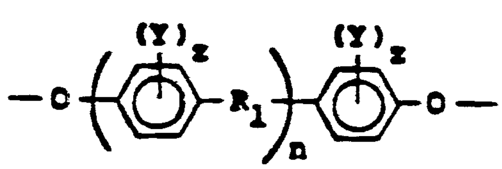

(II)

in which repeating units (I) and optionally repeating units (II) are connected by interbonding units derived from a carbonate precursor, wherein Y is selected from alkyl groups of 1 to 4 carbon atoms, chlorine or bromine, each z, independently, has a value of from 0 to 4 inclusive, n has a value of 0 or 1, $R_1$ is a divalent saturated or unsaturated hydrocarbon radical, O, CO, $SO_2$, S or a direct bond, with the proviso that when $R_1$ is $SO_2$ then repeating unit (II) is not the same as repeating unit (I), and wherein the polycarbonate has a

reduced viscosity of at least about 0.3 dl/g as measured in chloroform at a concentration of 0.5 g/100 ml at 25°C.

2. Cookware as defined in claim 1 wherein repeating units (II) of the polycarbonate have the formula

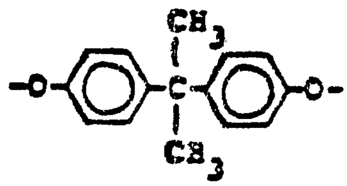

or the formula

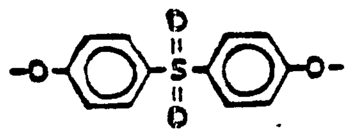

3. Cookware defined in one or both of the claims 1-2 wherein the carbonate precursor is selected from the group consisting of a carbonyl halide, a carbonate ester and a haloformate.

4. Cookware as defined in one or more of the claims 1-3 wherein the carbonate precursor gives interbonding units having the formula

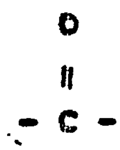

or interbonding units having the formula

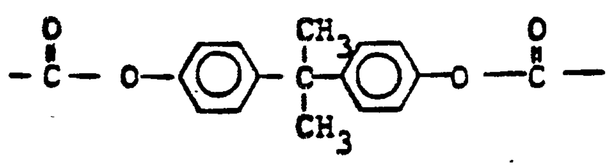

5. Cookware as defined in claim 1 wherein terminal units of the polycarbonate are bonded to repeating units (II).

6. Cookware as defined in claim 1 wherein the polycarbonate comprises repeating units having the formula

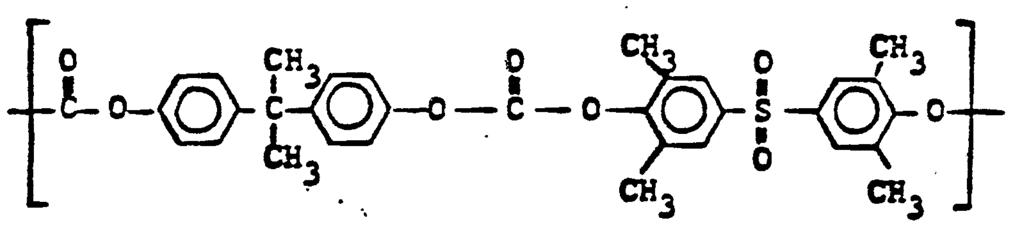

or repeating units having the formula

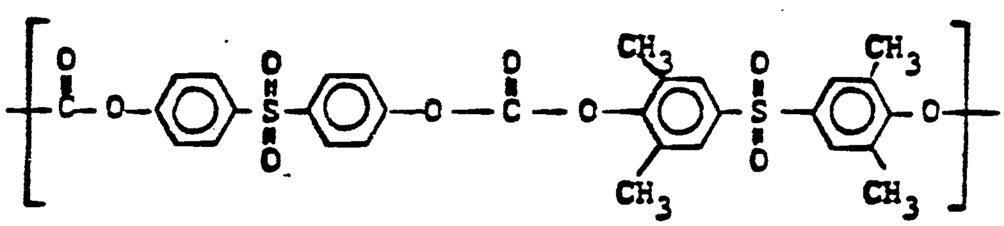

7. Cookware as defined in one or more of the claims 1-6 wherein the composition contains a polymer having mechanical compatibility with the polycarbonate.

8. Cookware as defined in claim 7 wherein the polymer is selected from a polyethersulfone, a poly(aryl ether), a poly (ester-carbonate), a polyester, a polyarylate, a poly(ether imide), a styrenic polymer and a vinyl chloride containing polymer.

9. Cookware as defined in claim 7 wherein the polymer is a styrenic polymer.

10. Cookware as defined in claim 7 wherein the polymer is a vinyl chloride containing polymer.

11. Cookware as defined in claim 1 wherein the composition contains a mineral filler, e.g. selected from calcium carbonate, wollastonite, mica, talc, silicon dioxide, glass spheres, glass powders, clay or quartz.

12. Cookware as defined in one or more of the claims 1-11 wherein the composition contains a pigment.

European Patent Office

# EUROPEAN SEARCH REPORT

Application number

EP 86 10 3028

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-3 269 986 (E.P. GOLDBERG) * Claims 1-3; column 4, lines 63-72; column 6, lines 37-40 * --- | 1-6 | C 08 L 69/00<br>C 08 G 63/62 |
| D,Y | US-A-3 737 409 (D.W. FOX) * Claims 1,2 * --- | 1-6 | |
| A | WO-A-8 404 104 (U.C.C.) * Claims 1-23 * --- | 1,7-10 | |
| A | US-A-4 489 181 (D.W. FOX et al.) * Claims 1-9 * ----- | 1,7-10 | |
| | | | TECHNICAL FIELDS SEARCHED (Int Cl 4) |
| | | | C 08 G<br>C 08 L |

The present search report has been drawn up for all claims

| Place of search | Date of completion of the search | Examiner |
|---|---|---|
| THE HAGUE | 06-11-1986 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document